Europäisches Patentamt

European Patent Office

Office européen des brevets

(11) Veröffentlichungsnummer: **0 141 352**
**B1**

(12) **EUROPÄISCHE PATENTSCHRIFT**

(45) Veröffentlichungstag der Patentschrift:
**20.12.89**

(21) Anmeldenummer: **84112620.4**

(22) Anmeldetag: **19.10.84**

(51) Int. Cl.⁴: **H 01 R 13/713**

(54) Elektrische Anschlussgerät, wie Steckdose mit Fehlerstromschalter für elektrische Verbraucher.

(30) Priorität: **26.10.83 DE 3338820**

(43) Veröffentlichungstag der Anmeldung:
**15.05.85 Patentblatt 85/20**

(45) Bekanntmachung des Hinweises auf die Patenterteilung:
**20.12.89 Patentblatt 89/51**

(84) Benannte Vertragsstaaten:
**CH FR GB IT LI**

(56) Entgegenhaltungen:
**EP-A- 0 060 790**
**EP-A- 0 088 390**
**DE-A- 2 920 287**
**US-A- 2 683 201**

(73) Patentinhaber: **ROBERT KRUPS STIFTUNG & CO. KG.,
Heresbachstrasse 29, D-5650 Solingen 19 (DE)**

(72) Erfinder: **Mahlich, Gotthard Ch., Dipl.-Ing., Auf dem
Kämpchen 29, D-5650 Solingen 11 (DE)**
Erfinder: **Vogelsang, Bernd, Mühlendamm 38,
D-5650 Solingen 25 (DE)**
Erfinder: **Storsberg, Gregor, Hossenhauerstrasse 40,
D-5650 Solingen 1 (DE)**

(74) Vertreter: **Buse, Karl Georg, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2 (DE)**

**Beschreibung**

Die Erfindung bezieht sich auf ein Anschlußgerät der im Gattungsbegriff des Anspruches 1 genannten Art.

Die Summenstromwandler sind nach Art eines Transformators gestaltet, wo im Fehlerfall in der Sekundärwicklung eine Spannung induziert wird. Liegt kein Fehler vor, so ergibt sich eine Stromgleichheit in der hin- und rückführenden Versorgungsleitung, weshalb die beiden zugehörigen, einander entgegengesetzt gleichen Magnetfelder einander kompensieren und daher keine Spannung in der Sekundärwicklung induziert wird.

Bei den bekannten Anschlußgeräten besteht der elektro-mechanische Wandler aus einem Klappanker-Magneten mit mechanisch vorgespanntem Anker, auf dessen einem Ankerschenkel eine vom Ausgang des Stromwandlers beaufschlagte Spule sitzt. Durch einen drehbaren Permanentmagneten am Ankerjoch läßt sich die Haltekraft des Ankers justieren. Im Fehlerfall wird über die vom Summenstromwandler gespeiste Spule ein magnetisches Feld im Klappankermagneten aufgebaut, welches demjenigen der Permanentmagneten entgegengerichtet ist und daher bei Überschreitung bestimmter Grenzwerte den Anker freigibt. Aufgrund seiner Vorspannung klappt der Anker auf und löst über einen Stift einen mechanischen Verstärker aus, der einen Satz von Schaltkontakten aus seiner Ein- in die Ausschaltstellung überführt. Diese Anschlußgeräte sind verhältnismäßig kostspielig und platzaufwendig. Ihr besonderer Nachteil liegt in zu langer Ansprechzeit, womit die Zuverlässigkeit des Schutzes gefährdet ist. Die Kostspieligkeit dieser Anschlußgeräte verhindert ihre breite Anwendung, wie sie bei elektrischen Haushaltsgeräten nötig wäre.

Durch EP-A-088 390 ist eine Schutzeinrichtung in elektrisch betriebenen Geräten bekannt, die bei einem Fehler – nämlich Flüssigkeit in einem Gehäuse – den Strom unterbricht. Die Unterbrechung erfolgt dabei durch Schmelzen eines (Spann)-Drahtes, wobei im Fehlerfalle eine Zündschaltung einen Halbleiterschalter zündet und der dann fließende Strom den (Spann-) Draht schmelzen läßt, so daß der Schalter durch seine freigewordene Federvorspannung öffnet.

Der Erfindung liegt die Aufgabe zugrunde, ein preiswertes elektrisches Anschlußgerät der im Gattungsbegriff des Anspruches 1 genannten Art mit einem zuverlässigen Fehlerstromschalter zu entwickeln, das sich durch geringen Platzbedarf und kurze Ansprechzeiten auszeichnet.

Dies wird durch die im Kennzeichen des Anspruches 1 angeführten Maßnahmen erreicht.

Die Ausbildung des Trennmittels kann in verschiedener Weise erfolgen. Baulich besonders einfach ist es zwar, eine auf die beweglichen Schaltkontakte einwirkende Federvorspannung als Trennmittel zu verwenden, die im Fall der Auslösung die Schaltkontakte selbsttätig in Ausschaltstellung überführt. Doch besteht die Gefahr eines längere Zeit anhaltenden Lichtbogens zwischen den sich öffnenden Kontaktenden, womit die kurze Ansprechzeit gefährdet ist. Es wird daher als Trennmittel ein aus Isolationsmaterial bestehender Trennkeil verwendet, der in Einschaltstellung außerhalb des Berührungsbereiches von gegeneinander federbelasteten Schaltkontakten sich befindet. Ein solcher Trennkeil ist zwar kraftbelastet und bestrebt, in den Berührungsbereich zwischen den Kontakten einzufahren, jedoch wird diese Einfahrbewegung in der Einschaltstellung des Schaltkontaktsatzes durch den am Trennkeil angreifenden schmelzfähigen Werkstoff unwirksam gemacht, der den Trennkeil in einer Ruhelage außerhalb des Berührungsbereiche der Kontakte entgegen seiner Kraftbelastung festhält. Eine solche Ausbildung eines selbstöffnenden Schalters ist von allgemeiner Bedeutung und läßt seine Anwendung auch in einer Schutzschaltung von elektrischen Verbrauchern zu, die nicht mit dem erfindungsgemäßen elektrischen Anschlußgerät zur Stromversorgung ausgerüstet sind.

Für die Verbesserung der Zündung empfiehlt es sich, dem Verstärker und Doppelweggleichrichter einen weiteren Schaltverstärker mit Kippstufe nachzuschalten und diesen am Eingang des Halbleiterschalters der Zündschaltstufe zu legen. Als Halbleiterschalter bietet sich ein Triac an.

Von besonderer Bedeutung ist es, das Anschlußgerät auf seine volle Wirksamkeit zu überprüfen, ohne den schmelzfähigen Werkstoff zu zerstören. Eine solche Kontrolle ist in bequemer und zuverlässiger Weise durch die im Anspruch 3 angeführten Maßnahmen erreichbar, die preiswert und raumsparend sind. Durch die Kopplung des Testschalters mit dem Hauptschalter werden die in der Nebenleitung befindlichen Begrenzungswiderstände allein wirksam, die den Heizstrom unter die Schmelztemperatur herabsetzen. Dieser Heizstrom fällt nur dann in einer definierten Höhe an, wenn die volle Funktionsfähigkeit der entscheidenden elektrischen Bauelemente der Schutzschaltung vorliegt und kann daher eine Kontrollanzeige wirksam testen, welche die Brauchbarkeit des Anschlußgerätes dokumentiert. Diese Kontrolle kann häufig durchgeführt werden, ohne das Anschlußgerät zu gefährden.

Im normalen Betrieb des Anschlußgerätes empfiehlt es sich, den Testschalter in seiner Ausschaltlage zu sichern, was durch eine entsprechende Schalterkombination leicht erzielbar ist. Dabei kann eine Kontrollanzeige für die Betriebsbereitschaft des Anzeigegerätes wirksam gesetzt werden, die in der Verbindung zwischen der einen Versorgungsleitung und der Zündschaltstufe geschaltet ist. Die Zündschaltstufe ist an die beiden Versorgungsleitungen angeschlossen.

In den Zeichnungen ist die Erfindung in einem Ausführungsbeispiel dargestellt. Es zeigen:

Fig. 1 und 2 die Draufsicht und Seitenansicht eines nach der Erfindung gestalteten Anschlußgeräts, nämlich eines Mehrfachsteckanschlusses,

Fig. 3 die Draufsicht auf den einen Betätiger aufweisenden Bereich des Anschlußgeräts von Fig. 1 und 2,

Fig. 4 eine geschnittene Seitenansicht des in Fig. 3 gezeigten Bereichs längs der dortigen Schnittlinie IV–IV,

Fig. 5 schematisch eine Schnittansicht durch einen im erfindungsgemäßen Anschlußgerät angeordneten selbstöffnenden mechanischen Schalter in dessen Einschaltstellung, wo die Schnittführung längs der Schnittlinie V–V von Fig. 6 genommen ist,

Fig. 6 die Draufsicht auf den Schalter von Fig. 5, ebenfalls in Einschaltstellung befindlich,

Fig. 7 eine der Fig. 5 entsprechende Schnittansicht des Schalters, wobei allerdings die Schaltkontakte in Ausschaltstellung sich befinden,

Fig. 8 eine beim erfindungsgemäßen Anschlußgerät verwendete Schutzschaltung und

Fig. 9 die Innenansicht eines Teilstücks des Gerätegehäuses eines zugehörigen elektrischen Verbrauchers, der am elektrischen Anschlußgerät der Fig. 1 und 2 angeschlossen ist bzw. des Anschlußgeräts selbst.

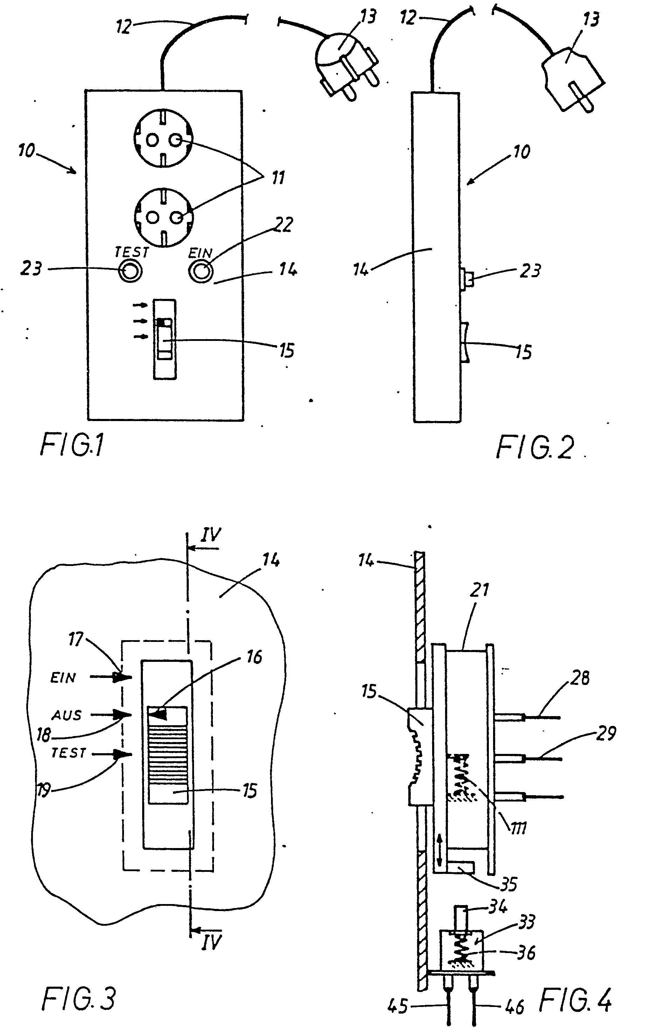

Das als Mehrfachsteckanschluß 10 ausgebildete Anschlußgerät von Fig. 1 und 2 besitzt mehrere Steckaufnahmen 11, in welche die Stecker nicht näher gezeigter elektrischer Verbraucher, insbesondere von Haushaltsgeräten, elektrisch ankuppelbar sind. Das Anschlußgerät 10 ist über einen Netzanschluß 12 und einen Stecker 13 an einer Stromquelle anschließbar. Am Gehäuse 14 des Geräts 10 befindet sich eine von außen zugängliche Handhabe 15 eines Stellschalters 21, der mit seiner Ablesemarke 16 in drei Arbeitspositionen verschoben werden kann, die am Gehäuse durch Gegenmarken 17, 18, 19 bezeichnet sind. Das Gehäuse 14 besitzt ferner zwei Kontroll-Lampen 22, 23, deren eine 22 die Einschaltlage des Anschlußgerätes 10 anzeigt und die andere 23 in der Arbeitsstellung 19 dann aufleuchtet, wenn die volle Funktionsfähigkeit aller maßgeblichen elektrischen Bauteile gegeben ist, was noch näher beschrieben wird.

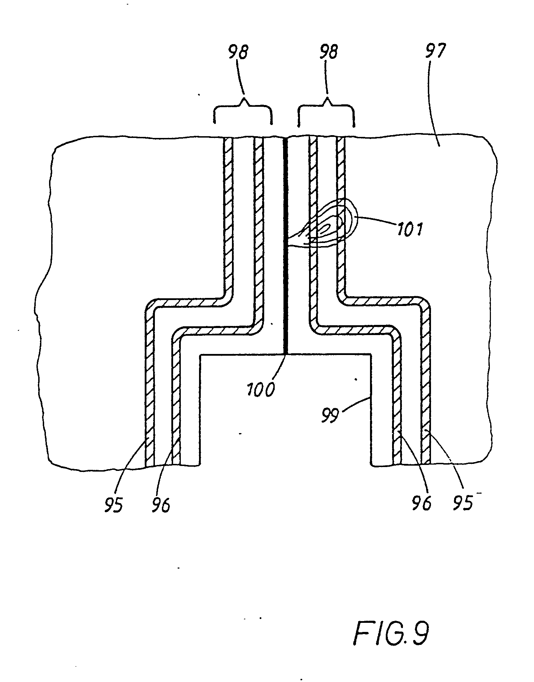

Im Inneren des Gehäuses 14 befindet sich der Fehlerstromschalter (siehe Figur 8), der einerseits einen Satz mechanisch beweglicher Schaltkontakte 24, 25, 26, 27 eines besonderen selbstöffnenden mechanischen Schalters 31 aufweist und andererseits eine elektronische Schutzschaltung 20 umfaßt. Die vom Netzanschluß 12 kommenden beiden Versorgungsleitungen 28, 29 enthalten diese Schaltkontakte 24 bis 27 und gehen, wie in Fig. 8 durch Pfeile 11 angedeutet ist, zu den aus Fig. 1 ersichtlichen Steckaufnahmen 11. Der Schaltkontaktsatz befindet sich an der Eingangsseite der Schutzschaltung 20, so daß beim Öffnen der Schaltkontakte 24 bis 27 sowohl die Schutzschaltung 20 als auch die an den Steckaufnahmen 11 angeschlossenen elektrischen Verbraucher vollkommen spannungsfrei sind. Das Anschlußgerät arbeitet in seinen drei Arbeitspositionen wie folgt:

Im Gebrauchsfall des Anschlußgeräts 10 ist die Handhabe 15 in die durch die Gegenmarke 17 in Fig. 3 gekennzeichnete Arbeitsposition «EIN» verschoben. Dadurch sind ein Hauptkontakt 31 und ein Gerätekontakt 32, die beide im Stellschalter 21 sitzen, leitend miteinander verbunden. In dieser Arbeitsposition ist zugleich die Tasthandhabe 34 eines noch näher zu beschreibenden Testschalters 33 unwirksam, was durch eine geeignete mit der Strichlinie 108 in Fig. 8 angedeutete Kopplung der Elemente bewerkstelligt wird. Nach dem Ausführungsbeispiel von Fig. 4 wird dies dadurch erreicht, daß der aufgrund einer Federbelastung 36 mit seinen Kontakten normalerweise in Trennlage befindliche Testschalter 33 in einem Abstand zu einer mit der Handhabe 15 mitbeweglichen Schulter 35 angeordnet ist, wodurch der Tastbetätiger 34 in seiner herausgeschobenen unwirksamen Lage sich befindet.

In dieser Arbeitsposition kann ein an der Steckaufnahme 11 angekuppelter elektrischer Verbraucher betrieben werden.

Liegt kein Defekt am elektrischen Verbraucher vor, z. B. an einem angeschlossenen Haushaltsgerät, wie einem Haartrockner, der die Bedienungsperson einem unter Umständen tödlichen elektrischen Unfall aussetzt, so ist der durch die eine Versorgungsleitung 28 hinströmende und durch die andere Versorgungsleitung 29 rückfließende elektrische Strom gleich. Die Versorgungsleitungen 28, 29 durchsetzen einen Summenstromwandler 37, der wie ein Transformator wirkt. Die Versorgungsleitungen 28, 29 sind einfach durch den Kern geführt und bilden die Primärseite. Bei Stromsymmetrie in diesen Leitungen 28, 29 entstehen jeweils gleich große, zueinander entgegengesetzt gerichtete magnetische Felder, die sich gegenseitig kompensieren und daher in einer Sekundärwicklung 38 keine Spannung induzieren. Dies wirkt sich in der Schutzschaltung 20 in folgender Weise aus.

Die Schutzschaltung 20 ist über eine Verbindung 39 mit der einen Versorgungsleitung 29 vor dem Summenstromwandler 37 bei 109 verbunden, während ihre andere Verbindung 40 über den Hauptkontakt 31 hinweg an der anderen Verbindungsleitung 28 bei 88 angeschlossen ist. Diese Verbindung 40 ist über einen mit Widerständen 41, 42 versehenen Spannungsteiler hochohmig auch noch an die andere Versorgungsleitung 29 hinter dem Summenstromwandler 37 angeschlossen, um in dem vorliegenden Gebrauchsfall bei der Arbeitsposition «EIN» eine parallel zu dem einen Widerstand 42 geschaltete Glimmlampe 22 zum Leuchten zu bringen, welche die eine, in Fig. 1 erläuterte Kontrollanzeige 22 bildet.

Die Sekundärwicklung 38 des Summenstromwandlers 37 ist an Eingangsleitungen 43, 43' eines als Ganzes mit 44 bezeichneten Doppelweggleichrichters und Verstärkers 44 angeschlossen, der nachfolgend abgekürzt «Gleichrichtverstärker 44» bezeichnet werden soll. Dieser umfaßt zwei Transistoren 45, 46, die zueinander spiegelbildlich über einen kleinen Stellwiderstand 47 von ca. 100 Ω verbunden sind, der über einen höherohmigen Stellwiderstand 48 von z. B. 5 kΩ mit Masse verbunden ist. Die Spannung der Kollektoren dieser Transistoren 45, 46 liegt gegen Masse an und ist groß genug, um über eine einen Widerstand von z. B. 100 kΩ, ausgerüstete Verbindungsleitung 49 die Basis eines weiteren Transistors 51 zu beaufschlagen, der zu einem in Fig. 8 zusammenfassend mit 50 bezeichneten Schaltverstärker mit Kippstufe gehört, der nachfolgend kurz «Schaltverstärker» 50 bezeichnet werden soll. Der Transistor 51 ist dadurch leitend gemacht und zieht seinen Kollektor, der über die Leitung 53 mit der Basis eines weiteren Transistors 54 in diesem Schaltverstärker 50 verbunden ist, auf Masse. Parallel zum vorausgehenden Transistor 51 ist ein Kondensator 55 an Masse angeschlossen. Bei diesem Betriebsfall sperrt folglich der Transistor 54 und es fließt kein Strom durch die seinem Kollektor vorgeschalteten Widerstände 56, 57 in der Leitung 58 eines Spannungsteilers, dessen Leitung 58 an die oben erwähnte Verbindung 39 der Schutzschaltung 20 angeschlossen ist. Mit dem Spannungsteiler 56, 57 ist der Eingang 71 einer insgesamt in Fig. 8 mit 70 bezeichneten Zündschaltstufe verbunden, die als Halbleiterschalter einen Triac 72 besitzt, dem ein Draht 73 aus schmelzfähigem leitenden Werkstoff und ein Widerstand 74 in Reihe geschaltet ist. Diese Hauptleitung 77 ist mit der anderen Verbindung 40 der Schutzschaltung 20 verknüpft und außerdem über einen Widerstand 75 und eine Diode 76 mit Masse verbunden. In der Zündschaltstufe 70 ist ein Kondensator 110 parallel zum Triac 72 und Schmelzdraht 73 an der anderen Verbindungsleitung 39 angeschlossen, der die Aufgabe hat, ein Überkopfzünden des Triac 72 zu verhindern. Wegen der erwähnten Stromlosigkeit in der Leitung 58 ist auch der Eingang 71 stromlos und der Triac 72 sperrt. In der Hauptleitung 77 der Zündschaltstufe 70 fließt folglich kein Strom. Die Schutzschaltung 20 ist nicht ausgelöst.

Die Schutzschaltung 20 wird aber sofort wirksam, wenn in dem geschilderten Gebrauchsfall über eine Bedienungsperson ein elektrischer Strom abfließt, der eine Strom-Unsymmetrie zwischen den beiden überwachten Versorgungsleitungen 28, 29 hervorruft. Dadurch wird in dem Summenstromwandler 37 eine Spannung induziert, die über die Eingangsleitungen 43, 43' auf den Gleichrichtverstärker 44 einwirkt. Während im vorausgehenden ordnungsgemäßen Gebrauchsfall durch die Einjustierung der Stellwiderstände 47, 48 eine Stromgleichheit zwischen den beiden Transistoren 45, 46 des Gleichrichtverstärkers 44 bestand, gilt dies im Fehlerfall nicht mehr. Die Basis der beiden Transistoren 45, 46 ist über einen jeweiligen Widerstand 67, 68 von etwa 470 kΩ und einen gemeinsamen hochohmigen Widerstand 69 mit der Masse verbunden. Dieser hochohmige Widerstand 69 kann 2,2 MΩ aufweisen. Parallel zu ihm ist ein Schutzkondensator 78 von etwa 2,2 µF mit der Masse verbunden. Die Anschlußstellen sind durch einen weiteren Widerstand 79 von etwa 470 Ω mit der erwähnten Verbindungsleitung 49 des Gleichrichtverstärkers 44 verbunden. Wegen der Strom-Unsymmetrie an den beiden Eingangsleitungen 43, 43' treten Spannungsunterschiede an den beiden Basen ein, weshalb der eine Transitor 46 wesentlich mehr Strom leitet als vorher, während der andere Transistor 45 einen etwas geringeren Strom führt. Die Summe der beiden fließenden Ströme ist daher größer und die Kollektorspannung an den Transistoren 45, 46 kleiner als im ordnungsgemäßen Gebrauchsfall. Durch die Verbindungsleitung 49 fließt daher ein größerer Strom aus dem Schaltverstärker 50. Dort ist in einer Parallelleitung 80 zu den dortigen Transistoren 51, 54 ein Widerstand 81 von etwa 100 kΩ geschaltet, wie aus Fig. 8 zu erkennen ist. Die Folge dieser Spannungsverhältnisse im Gleichrichtverstärker 44 ist, daß der Transistor 51 des Schaltverstärkers zu sperren beginnt, während der andere Transistor 54 zu leiten beginnt. Dies läßt eine Kippstufe wirksam werden, die zweierlei herbeiführt.

Die Basisspannung am Transistor 51 sinkt weiter ab bis praktisch auf den Wert Null, womit der Zustand stabil bleibt. Der Kollektorstrom durch den anderen Transistor 54 steigt schlagartig an und zündet über die Eingangsleitung 71 den Triac 72 in der benachbarten Zündschaltstufe 70. Parallel zur Leitung 58 im Schaltverstärker 50 ist in einer Leitung 82 ein Widerstand 83 zwischen der Verbindung 39 und der Basisleitung des Transistors 54 geschaltet.

Nach Zündung des Triac 72 fließt sofort ein hoher Heizstrom von z. B. 2 A durch die Hauptleitung 77 und erhitzt den in Reihe geschalteten Schmelzdraht 73 über die Schmelztemperatur hinweg, so daß er zerstört wird. Dadurch ist der selbstöffnende mechanische Schalter 30 wirksam gesetzt. Durch seine in Fig. 8 gestrichelt angedeutete Wirkverbindung werden nahezu augenblicklich die beiden Schaltkontakte 25, 26 geöffnet, wodurch die Stromversorgung zum Verbraucher in den beiden Versorgungsleitungen 28, 29 unterbrochen ist.

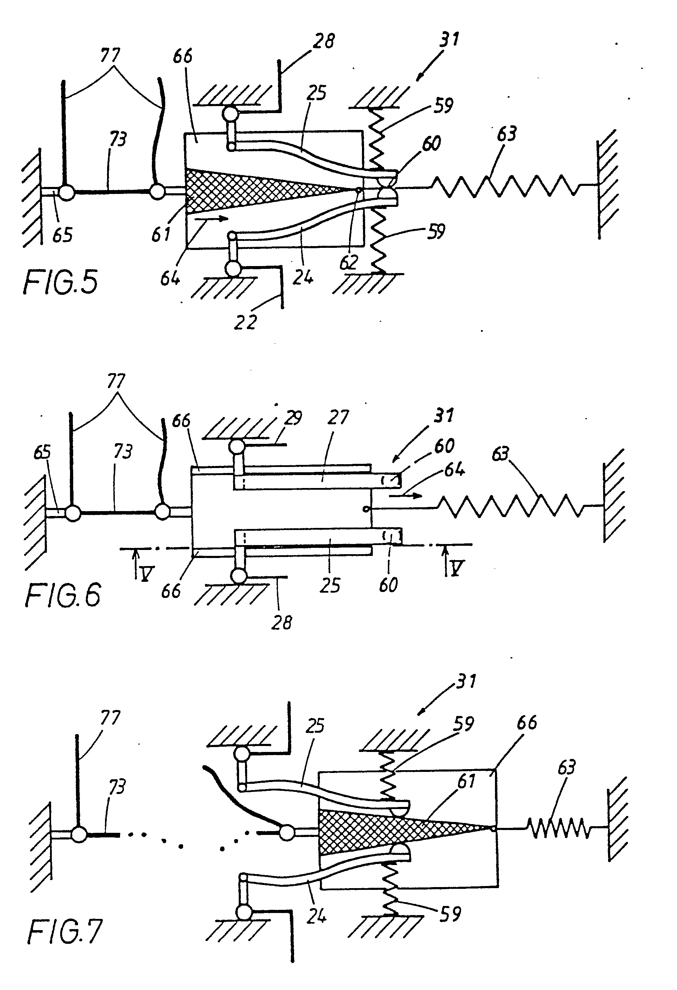

Die außerordentlich schnelle Reaktion des Schalters 30 ergibt sich durch die besondere Gestaltung gemäß Fig. 5 bis 7, wo der besseren Übersicht wegen nur die wesentlichsten Bestandteile schematisch dargestellt sind. Der Schalter 30 befindet sich normalerweise immer in Einschaltstellung, denn die mechanisch beweglichen Schaltkontakte 24 bis 27 werden jeweils durch eine Federbelastung 59 gegeneinander gedrückt gehalten.

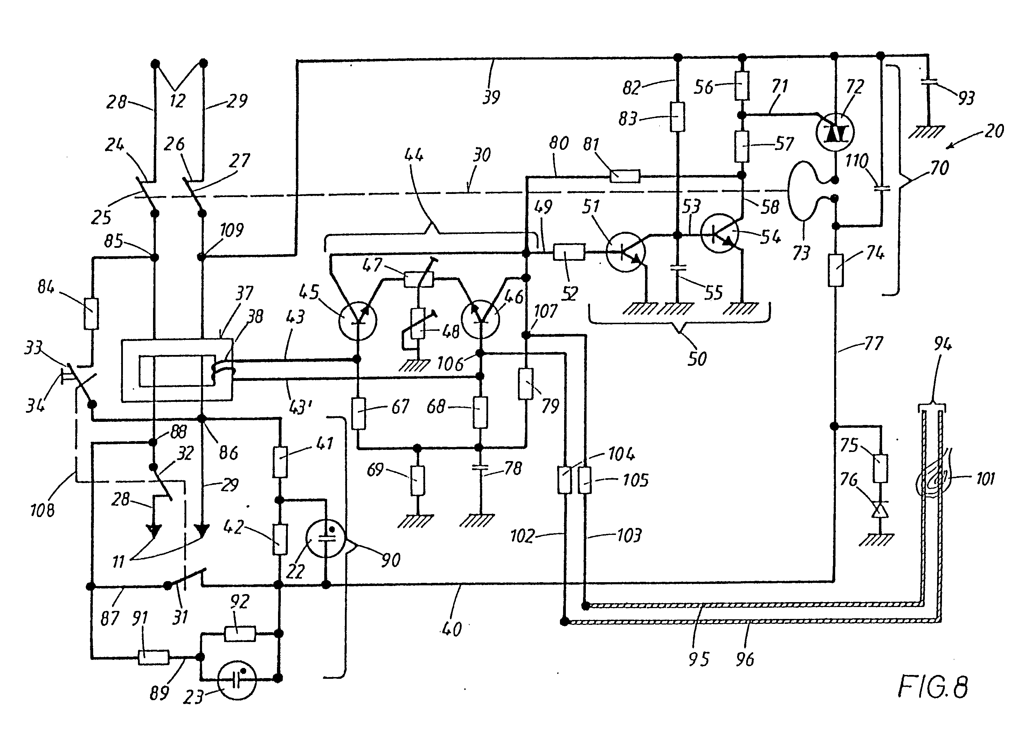

Es liegt dann die aus Fig. 5 und 6 ersichtliche Berührungslage vor. In Ausrichtung mit der Berührungsstelle 60 dieser Schaltkontakte 24, 25 bzw. 26, 27 ist der Bewegungsweg der Keilspitze 62 eines aus Isolationsmaterial bestehenden Trennkeils 61 angeordnet. Der Trennkeil 61 ist zwar immer bestrebt, aufgrund einer z. B. von einer Feder 63 ausgehenden Kraftbelastung im Sinne des Bewegungspfeils 67 sich zu bewegen, doch ist er daran durch den Schmelzdraht 73 gehindert. Das eine Ende des Schmelzdrahts 73 ist am Trennkeil 61 befestigt, während sein anderes Ende einen festen Verankerungspunkt 65 besitzt. Dadurch wird der Trennkeil 61, seiner Kraftbelastung 63 entgegen, in einer Ruhelage außerhalb des Berührungsbereichs 60 der Schutzkontakte gehalten.

Zündet der Triac 72 einen hohen Heizstrom, so ergeben sich die aus Fig. 7 ersichtlichen Verhältnisse. Wird der Schmelzdraht 73 zerstört, so schnellt der Trennkeil 61 unter Entspannung der auf ihn wirkenden Kraftbelastung 63 in den Berührungsbereich 60 zwischen die Schutzkontakte und drückt sie auseinander. Weil er dabei zwischen die Kontaktstellen als Trennwand tritt, unterbindet er von vornherein einen zeitverzögernden Lichtbogen zwischen den sich öffnenden Kontaktenden. Durch das Isolationsmaterial des Trennkeils 61 werden die Kontakte 24, 25 bzw. 26, 27 von vornherein gegeneinander abgeschirmt. Es tritt augenblicklich eine Trennlage der Kontaktenden gegen die auf sie einwirkende Federbelastung 59 ein.

Für diese Einfahrbewegung des Trennkeils 61 können Leitflächen dienen. Im dargestellten Ausführungsbeispiel werden hierzu Seitenflansche 66 am Trennkeil 61 verwendet, die längs der Kontaktzungen 24 bis 27 sich bewegen können. Man kann auch andere Führungsmittel, wie Gleitschienen verwenden.

Ausweislich der Fig. 3 und 4 kann der Schalter 21 auch noch in die Arbeitsposition «AUS» verschoben werden, die durch die Gegenmarke 18 gekennzeichnet ist. Jetzt ist, im Gegensatz zum vorher beschriebenen Gebrauchsfall «EIN» zwar der Hauptkontakt 31 geschlossen, aber der Gerätekontakt 32 geöffnet, wodurch die Versorgungsleitung 28 unterbrochen ist. Ein solcher Gerätekontakt 32 könnte auch an analoger Stelle in der anderen Versorgungsleitung 29 vorgesehen sein, der gleichzeitig und im gleichen Sinne mit den dargestellten zusammenwirkt. Dieses Aufwands bedarf es aber nicht, weil, auch wenn die kontaktiert mit dem Verbraucher bleibende Versorgungsleitung 29 stromführend ist, ein elektrischer Unfall durch die Schutzschaltung 20 verhindert wird. Kommt es nämlich zu einer Stromentnahme in der Leitung 29, die vom Wert Null bei der Leitung 28 abweicht, so spricht der Summenstromwandler 37 an und es kommt aufgrund der bereits beschriebenen Schaltung zu einer Zündung des Triac 72, der den Schmelzdraht 73 zerstört und den vorgespannten Schalter 30 in der beschriebenen Weise öffnet.

Die Handhabe 15 kann schließlich in die durch die Gegenmarke 19 gekennzeichnete unterste Arbeitsposition «TEST» von Fig. 3 verschoben werden. Schon beim Übergang wird zunächst außer dem bereits geöffneten Gerätekontakt 32 auch noch der Hauptkontakt 31 unterbrochen. In der Endstellung stößt schließlich die oben erwähnte Schulter 35 der Handhabe 15 gegen den Tastbetätiger 34 des Testschalters 33 und drückt ihn gegen seine Rückstellfeder 36 zurück. Dadurch wird der Testschalter 33 in Fig. 8 geschlossen, der über einen Vorwiderstand 84 einerends durch die Verbindungsstelle 85 mit der einen Verbindungsleitung 28 vor dem Summenstromwandler 37 verbunden ist und anderends eine Verbindungsstelle 86 an der anderen Versorgungsleitung 29 hinter dem Summenstromwandler 37 besitzt. Über den geschlossenen Testschalter 33 tritt eine Strom-Unsymmetrie in den beiden Verbindungsleitungen 28, 29 ein, die in der bereits oben im Zusammenhang mit dem Fehlerfall geschilderten Weise über die Eingangsleitungen 43, 43' den Gleichrichterverstärker 44 und den Schaltverstärker 50 beaufschlagt, der die Zündung des Triac 72 dadurch hervorruft. Der in der Hauptleitung 77 der dortigen Zündstufe 70 fließende Heizstrom ist aber durch den Aufbau der insgesamt mit 90 in Fig. 8 bezeichneten Testeinrichtung soweit reduziert, daß eine Zerstörung des Schmelzdrahts 73 dabei nicht eintritt.

Durch die Unterbrechung des Hauptkontakts 31 ist die Verbindung 40 der Zündschaltung 70 nicht mehr unmittelbar über die Leitung 87 mit seiner Anschlußstelle 88 an der einen Versorgungsleitung 28 angeschlossen, sondern mittelbar über eine Nebenleitung 89, die einen Vorwiderstand 91 zwei zueinander parallel geschaltete Bauelemente, nämlich einen Widerstand 92 und eine Glimmlampe 23, aufweist. Dadurch geht zunächst die den Betriebszustand in der Position «EIN» anzeigende Glimmlampe 22 aus. Jetzt ist die Verbindung 40 ausschließlich durch die Widerstände 91, 92 mit ihrer Anschlußstelle 88 der Versorgungsleitung 28 verbunden. Diese Widerstände 91, 92 begrenzen den Heizstrom in der Hauptleitung 77 der Zündschaltstufe 70 unter einen Wert, der im Schmelzdraht 73 eine unter der Schmelztemperatur liegende Erwärmung nur zuläßt. Der Heizdraht 73 bleibt unbeschädigt. Das Verhältnis der beiden Begrenzungswiderstände 91, 92 ist zueinander so bemessen, daß der im Testfall in der Testeinrichtung 90 anfallende Strom gerade die Glimmlampe 23 zündet, welche damit eine Kontrollanzeige für die einwandfreie Funktionsfähigkeit der maßgeblichen Bauelemente in der Schutzschaltung 20 ist. Diese Glimmlampe ist die eingangs erwähnte Kontroll-Leuchte 23 im Gehäuse 14 des Anschlußgeräts 10. Durch Aufleuchten dieser Kontroll-Leuchte 23 ist die einwandfreie Funktion des Gleichrichtverstärkers 44, Schaltverstärkers 50, Zündschaltstufe 70 und auch der Testeinrichtung 90 sowie der zugehörigen elektrischen Bauelemente angezeigt.

Es wäre natürlich auch möglich, die drei abgestimmt zueinander arbeitenden Schaltstellen 31, 32, 33 in anderer Weise miteinander zu koppeln, als es im dargestellten Ausführungsbeispiel durch den Stellschalter 21 mit dem nebengeordneten Testschalter 33 geschieht. Zu der Testeinrichtung 90 gehört noch ein gegen Masse geschalteter Schutzkondensator 93 an der anderen Verbindung 39 bei der Versorgungsleitung 29. Die Handhabe 15 ist, wie in Fig. 4 schematisch angedeutet ist, durch eine Rückstellfeder 111 in ihre Arbeitsstellung «AUS» hin federbelastet. Läßt man in der Arbeitsposition «TEST» die Handhabe 15 los, so bewegt sie sich von selbst in diese Ausgangsstellung zurück.

Eine alternative Gestaltung bestünde darin, die Hauptkontakte 31, Gerätekontakte 32 und den Testschalter 34 in einem gemeinsamen Schaltgehäuse zusammenzufassen. Man könnte aber auch getrennte Schalter verwenden, bei denen der Taster 34 des Testschalters 33 manuell betätigt wird, aber in den anderen Arbeitsstellungen entweder unzugänglich ist oder aber durch Sperrmittel blockiert wird.

Der beschriebene Fehlerstromschalter kann schließlich im Bedarfsfall auch noch mit einem Sensor 94 ausgerüstet, werden, der auf eindringende Flüssigkeiten, insbesondere Wasser anspricht. Dieser besteht aus einem offenen elektrischen Doppelleiter 95, 96, der mit seinen beiden Strängen gegeneinander isoliert in Randbereichen 98 zu Gehäuseöffnungen 99 und Gehäusefugen 100 angeordnet ist, wie der Innenansicht auf ein Teilstück eines Gehäuses 97 des elektrischen Verbrauchers in Fig. 9 zu entnehmen ist. Ein solcher Sensor 94 könnte ergänzend oder alternativ auch noch in den entsprechenden Randbereichen im Inneren des Gehäuses 14 des Anschlußgeräts 10 vorgesehen sein, um auch dieses gegenüber eindringendem Wasser zu überwachen. Diese Doppelleitungen 95, 96 sind gegeneinander isoliert als elektrisch leitende Streifen an jenen Stellen des verbraucherseitigen bzw. anschlußgerätseitigen Gehäuses 97 bzw. 14 angebracht, der bei bestimmungsgemäßen Gebrauch der Geräte unzugänglich ist. Diese Streifen 95, 96 sind zudem soweit von den Gehäusekanten zurückgesetzt, daß die vorgeschriebenen Luft- und Kriechwege eingehalten werden. Durch die Öffnung 90 bzw. durch den Gehäusespalt 100 eindringendes Wasser 101, wie es in Fig. 8 und 9 durch einen Tropfen angedeutet ist, erhöht die Leitfähigkeit zwischen den beiden Leitungssträngen 95, 96. Dieser Doppelleiter 95, 96 ist über Leitungen 102, 103 und darin geschaltete Widerstände 104, 105 mit dem Gleichrichterverstärker 44 verbunden. Im vorliegenden Fall ist die Leitung 102 ausweislich der Anschlußstelle 106 an der Basis des einen Transistors 46 und die Leitung 103 ausweislich der Anschlußstelle 107 an den Kollektor dieses Transistors 46 angeschlossen. Kommt es zu dieser Leitfähigkeit aufgrund der Wassertropfen 101, so nimmt in der bereits oben beschriebenen Weise der durch die beiden Transistoren 45, 46 führende Strom eine Unsymmetrie an, der zu einem höheren Gesamtstrom führt, welcher den zum Schaltverstärker 50 gehörenden Transistor 51 sperrt und dadurch dessen anderen Transistor 54 leitend macht. All dies führt in der bereits beschriebenen Weise zu einer Zündung des Triac 72 in der Zündschaltung 70, die in der bereits dargelegten Weise die Schaltkontakte 25, 27 in den Versorgungsleitungen 28, 29 durch Zerstörung des Schmelzdrahts 73 unterbricht. Wie ersichtlich, dient somit die Schutzschaltung 20 zugleich zur Überwachung der auf Flüssigkeit ansprechenden Sensoren 94.

Sofern diese Sensoren 94 an dem am Anschlußgerät 10 elektrisch anzuschließenden elektrischen Verbraucher sich befinden, sind die Leitungen 102, 103 zweckmäßigerweise mit der von den Steckaufnahmen 11 zum Verbraucher führenden Netzleitungen zu einem gemeinsamen Kabel zusammengefaßt. Es liegt dann ein vieradriges Kabel vor, das einerseits die elektrische Verbindung mit den Versorgungsleitungen 28, 29 in der Steckaufnahme 11 des Anschlußgeräts 10 herstellt und andererseits über weitere, in Fig. 1 nicht näher gezeigte Steckaufnahmen die Leitungen 102, 103 mit der Schutzschaltung 20 elektrisch verbindet.

Die Wirkungsweise des Fehlerstromschalters läßt sich zusammenfassend folgendermaßen interpretieren. Wenn in dem Summenstromwandler 37 Spannung induziert wurde, wird diese in der Stufe des Gleichrichtverstärkers 44 in ihren beiden Halbwellen gleichgerichtet und verstärkt. Der Schaltverstärker 50 dient dazu, den Leistungshalbleiter 72 in der Zündstufe 70 ansteuern zu können, wozu eine weitere Verstärkung mit definiertem Schaltverhalten in dieser Schaltstufe 50 erreicht wird. Der Triac 72 bringt den Draht 73 unabhängig von der Polarität des Netzes zum Schmelzen.

In der Testeinrichtung 90 wird ein Fehlerfall simuliert, was dadurch erreicht wird, daß die Zündschaltstufe 70 vom Netz 28, 29 getrennt, aber mittelbar über einen hochohmigen Begrenzungswiderstand 91, 92 angeschlossen bleibt.

Bezugszeichenliste:
10  Mehrfachsteckanschluß Anschlußgerät
11  Steckaufnahme
12  Netzanschluß
13  Stecker
14  Gehäuse
15  Handhabe von 21
16  Ablesemarke
17  Gegenmarke «EIN»
18  Gegenmarke «AUS»
19  Gegenmarke «TEST»
20  Schutzschaltung
21  Stellschalter
22  Kontrollanzeige, Glimmlampe
23  Kontrollanzeige, Glimmlampe
24  Schaltkontakt
25  Schaltkontakt
26  Schaltkontakt
27  Schaltkontakt
28  Versorgungsleitung
29  Versorgungsleitung
30  selbstöffnender Schalter
31  Hauptkontakt
32  Gerätekontakt
33  Testschalter
34  Tastbetätiger von 33
35  Schulter bei 15
36  Federbelastung
37  Summenstromwandler
38  Sekundärwicklung
39  Verbindung
40  Verbindung
41  Widerstand
42  Widerstand
43  Eingangsleitung
43'  Eingangsleitung
44  Doppelweggleichrichter und Verstärker, Gleichrichterverstärker
45  Transistor
46  Transistor
47  Stellwiderstand
48  Stellwiderstand
49  Verbindungsleitung
50  Schaltverstärker mit Kippstufe,

51 Transistor
52 Widerstand
53 Leitung
54 Transistor
55 Kondensator
56 Widerstand
57 Widerstand
58 Leitung
59 Federbelastung
60 Berührungsbereich
61 Trennkeil
62 Keilspitze
63 Feder
64 Bewegungspfeil von 61
65 Verankerung von 73
66 Seitenflansch bei 61
67 Widerstand
68 Widerstand
69 hochohmiger Widerstand
70 Zündschaltstufe
71 Eingang
72 Triac
73 Schmelzdraht
74 Widerstand
75 Widerstand
76 Diode
77 Hauptleitung
78 Schutzkondensator
79 Widerstand
80 Parallelleitung
81 Widerstand
82 Parallelleitung
83 Widerstand
84 Vorwiderstand
85 Verbindungsstelle
86 Verbindungsstelle
87 Leitung
88 Anschlußstelle
89 Nebenleitung
90 Testeinrichtung
91 Vorwiderstand
92 Widerstand
93 Schutzkondensator
94 Sensor
95 ein Doppelleiter von 94
96 anderer Doppelleiter von 94
97 Gehäuse
98 Randbereich
99 Gehäuseöffnung
100 Gehäusefuge
101 Wassertropfen
102 Leitung
103 Leitung
104 Widerstand
105 Widerstand
106 Anschlußstelle
107 Anschlußstelle
108 Strichlinie von Fig. 8
109 Anschlußstelle von 39
110 Kondensator
111 Rückstellfeder

**Patentansprüche**

1. Elektrisches Anschlußgerät (10), wie Steckdose, Mehrfachsteckanschluß, Verteilerdose, Zwischenstecker od. dgl., mit Versorgungsleitungen (28, 29) für elektrische Verbraucher und mit einem Fehlerstromschalter, umfassend

einen Satz mechanischer Schaltkontakte (24, 25; 26, 27) in den beiden Versorgungsleitungen (28, 29), die zwischen einer Ein- und Ausschaltstellung beweglich sind,

einen die Versorgungsleitungen (28, 29) überwachenden Summenstromwandler (37) und einen die Schaltkontakte (24, 25; 26, 27) in Ausschaltstellung überführenden elektro-mechanischen Wandler, wobei

in Einschaltstellung die beweglichen Schaltkontakte (24, 25; 26, 27) zwar stets einem vorgespannten (63), sie selbsttätig in Ausschaltstellung überführenden Trennmittel (61) ausgesetzt sind, aber die Bewegung (64) des Trennmittels (61) durch einen schmelzfähigen Werkstoff (73) gehemmt ist,

der schmelzfähige Werkstoff im Bereich eines elektrisch aufheizbaren Gliedes (Heizglieds 73) einer an die Versorgungsleitungen (28, 29) angeschlossenen, einen Halbleiterschalter (72) aufweisenden Zündschaltstufe (70) angeordnet ist,

die Zündschaltstufe (70) von einem Verstärker und Doppelweggleichrichter (Gleichrichtverstärker 44) steuerbar ist, an dessen Eingang (43, 43') der Summenstromwandler (37) angeschlossen ist

und der Gleichrichtverstärker (44) den Halbleiterschalter (72) dann zündet, wenn eine einen bestimmten Grenzwert überschreitende Strom-Unsymmetrie in den beiden überwachten Versorgungsleitungen (28, 29) eintritt,
dadurch gekennzeichnet,

daß die Schaltkontakte (24, 25; 26, 27) im Berührungssinne gegeneinander federbelastet (59) sind,

das Trennmittel (61) aus einem in den Berührungsbereich (60) zwischen den Schaltkontakten (24, 25; 26, 27) einfahrbaren Trennkeil (61) aus Isolationsmaterial besteht

und der Trennkeil (61) zwar im Sinne dieser Einfahrbewegung (64) kraftbelastet (63) ist, aber – in Einschaltstellung der Schaltkontakte – durch den schmelzfähigen Werkstoff (73) in einer Ruhelage außerhalb des Berührungsbereichs (60) festgehalten ist (vergl. Fig. 5 und 6).

2. Anschlußgerät nach Anspruch 1, dadurch gekennzeichnet, daß dem Gleichrichtverstärker (44) ein weiterer Schaltverstärker mit Kippstufe (50) nachgeschaltet (49) ist und dieser am Eingang (71) des Halbleiterschalters, wie einem Triac (72), der Zündschaltstufe (70) liegt.

3. Anschlußgerät nach Anspruch 1 und 2, dadurch gekennzeichnet, daß ein Testschalter (33) die eine Versorgungsleitung (28) vor (85) dem Summenstromwandler (37) mit der anderen Versorgungsleitung (29) hinter (86) dem Summenstromwandler (37) verbindet und mit einem zwischen der einen Versorgungsleitung (28) und der Zündschaltstufe (70) liegenden Hauptkontakt (31) gekoppelt ist,

im Testfall der Testschalter (33) zwar eine den Grenzwert übersteigende Strom-Unsymmetrie im Summenstromwandler (37) hervorruft, vorausgehend aber den Hauptkontakt (31) öffnet und eine Begrenzungswiderstände (91, 92) aufweisende Nebenleitung (89) zwischen der unterbrochenen Versorgungsleitung (28) und der Zündschaltstufe (70) eingeschaltet läßt,

wobei die Begrenzungswiderstände (91, 92) den elektrischen Heizstrom so weit reduzieren, daß die Temperatur des schmelzfähigen Werkstoffs (73) nicht überschritten wird und nur der bei voller Funktionsfähigkeit der elektrischen Bauelemente der Schutzschaltung (20) in definierter Höhe anfallende Heizstrom eine Kontrollanzeige (32) wirksam setzt.

4. Anschlußgerät nach Anspruch 3, dadurch gekennzeichnet, daß im Betrieb des Anschlußgerätes (10) der Testschalter (33) in seiner Offenlage gesichert ist und eine Kontrollanzeige (22) für die Betriebsbereitschaft des Anzeigegerätes (10) wirksam setzt, die in einer Verbindung der einen Versorgungsleitung (29) mit der Zündschaltstufe (70) angeordnet ist.

## Claims

1. An electrical connecting device (10) such as a plug socket, a multiple plug connection, a junction box, an adapter plug or the like, with supply lines (28, 29) for electrical loads and a leakage current switch, comprising

a set of mechanical switch contacts (24, 25; 26, 27) in the two supply lines (28, 29), which are movable between a switched-on and a switched-off position,

a sum current transformer (37) for monitoring the supply lines (28, 29), and an electro-mechanical transducer for transferring the switch contacts (24, 25; 26, 27) into the switched-off position, wherein

in the switched-on position the movable switch contacts (24, 25; 26, 27) are admittedly always subjected to a prestressed (63) separating means (61) for automatically transferring them into the switched-off position but the movement (64) of the separating means (61) is inhibited by a fusible material (73),

the fusible material is arranged in the region of an electrically heatable member (heating member 73) of a firing switching stage (70) which is connected to the supply lines (28, 29) and which has a semiconductor switch (72),

the firing switching stage (70) is controllable by an amplifier and a full-wave rectifier (rectifying amplifier 44), to the input (43, 43') of which is connected the sum current transformer (37),

and the rectifying amplifier (44) fires the semiconductor switch (72) when a current asymmetry exceeding a given limit value occurs in the two supply lines (28, 29) being monitored,

characterised in that

the switch contacts (24, 25; 26, 27) are springloaded (59) towards each other in the contact direction,

the separating means (61) comprises a separating wege (61) of insulating material, which can be introduced into the contact region (60) between the switch contacts (24, 25; 26, 27),

and the separating wedge (61) is admittedly urged by a force (63) in the direction of said introduction movement (64) but — in the switched-on position of the switching contacts — is retained by the fusible material (73) in a rest position outside the contact region (60) (see Figures 5 and 6).

2. A connecting device according to claim 1 characterised in that disposed on the output side of the rectifying amplifier (44) is a further switching amplifier with toggle stage (50) and same is connected to the input (71) of the semiconductor switch such as a triac (72) of the firing switching stage (70).

3. A connecting device according to claim 1 and claim 2 characterised in that a test switch (33) connects the one supply line (28) upstream (85) of the sum current transformer (37) to the other supply line (29) downstream (86) of the sum current transformer (37) and is coupled to a main contact (31) disposed between the one supply line (28) and the firing switching stage (70),

in the test situation the test switch (33) admittedly produces a current asymmetry exceeding the limit value in the sum current transformer (37) but previously opens the main contact (31) and leaves switched on a by-pass line (89) having limiting resistors (91, 92), between the interrupted supply line (28) and the firing switching stage (70),

wherein the limiting resistors (91, 92) reduce the electrical heating current to such an extent that the temperature of the fusible material (73) is not exceeded

and only the heating current which occurs in the situation of full operability of the electrical components of the protective circuit (20) at a defined level sets the check display (32) in operation.

4. A connecting device according to claim 3 characterised in that in operation of the connecting device (10) the test switch (33) is secured in its open position and sets in operation a check display (22) for operational readiness of the display device (10), which is arranged in a connection of the one supply line (29) with the firing switching stage (70).

## Revendications

1. Dispositif de raccordement électrique (10) tel que prise enfichable, prise multiple de raccordement, boîte de séparation, élément enfichable intermédiaire ou similaire, comportant des conducteurs d'alimentation (28, 29) destinés à des appareils utilisant l'électricité et comportant un disjoncteur de courant de fuite, comprenant un jeu de contacts de commutation mécaniques (24, 25, 26, 27) situés sur les deux conducteurs d'alimentation (28, 29), qui peuvent se déplacer en position de circuit fermé ou en position de circuit ouvert, un transformateur totalisateur de courants (37) qui surveille les conducteurs d'alimentation (28, 29) et un convertisseur électro-mécanique qui met les contacts de commutation (24, 25; 26, 27) en position de circuit ouvert, les contacts de commutation (24, 25; 26, 27) étant exposés en permanence lorsqu'ils sont en position de circuit fermé à un moyen de séparation (61) mis en précontrainte (63) qui les amène automatiquement en position de circuit ouvert, le déplacement (64) du moyen de séparation (61) étant empêché par un matériau fusible (74) qui est disposé dans la zone d'un organe de chauffage électrique (élément chauffant 73) d'un étage d'amorçage (70) présentant un interrupteur à semi-conducteur (72), connecté aux conducteurs d'alimentation (28, 29), l'étage d'amorçage (70) pouvant être commandé par un amplificateur et un redresseur double alternance (amplificateur-redresseur 44), à l'entrée (43, 43') duquel est connecté le transformateur (37) totalisateur de courants, et l'amplificateur-redresseur (44) amorçant l'interrupteur à semi-conducteur (72) lorsqu'il se produit une dissymétrie de courants dépassant une valeur limite déterminée dans les deux conducteurs d'alimentation surveillés (28, 29), caractérisé en ce que les contacts de commutation (24, 25; 26, 27) sont (les uns contre les autres) sollicités par un ressort (59) dans la direction du contact, le moyen de séparation (61) est constitué par un coin de séparation (61) en matériau isolant susceptible d'être amené à force dans la zone de contact (60) entre les contacts de commutation (24, 25, 26, 27) et en ce que le coin de séparation (61) tout en étant soumis à une force (63) s'exerçant dans le sens de ce déplacement (64) est maintenu — les contacts étant en position de circuit fermé — par le matériau fusible (73) en situation de repos hors de la zone de contact (60) (voir les figures 5 et 6).

2. Dispositif de raccordement selon la revendication 1, caractérisé en ce qu'un autre amplificateur de commutation muni d'un étage de basculement (50) est connecté en aval (49) de l'amplificateur-redresseur (44) et en ce que celui-ci est situé à l'entrée (71) de l'interrupteur à semi-conducteur, tel qu'un triac (72), de l'étage d'amorçage (70).

3. Dispositif de raccordement selon la revendication 1 ou 2, caractérisé en ce qu'un interrupteur d'essai (33) relie l'un des conducteurs d'alimentation (28) en amont (85) du transformateur totalisateur de courants (37) à l'autre conducteur d'alimentation (29) en aval (86) du transformateur totalisateur de courants (37) et qu'il est couplé au moyen d'un contact principal situé entre un conducteur d'alimentation (28) et l'étage d'amorçage (70), en ce qu'en cas d'essai l'interrupteur d'essai (33) provoque effectivement une dissymétrie de courants dépassant la valeur limite dans le transformateur totaliseur de courants (37) mais avec la condition préalable qu'il ouvre le contact principal (31) et laisse en circuit un conducteur secondaire (89) muni de résistances de limitation (91, 92) et situé entre le conducteur d'alimentation interrompu (28) et l'étage d'amorçage (70), les résistances de limitation (91, 92) réduisant l'intensité du courant électrique de chauffage suffisamment pour que la température de fusion du matériau fusible (73) ne soit pas dépassée, et en ce que ce n'est que dans le cas où les composants électriques du circuit de protection (20) présentent une parfaite aptitude au fonctionnement, que le courant de chauffage dont le débit atteint une valeur définie, met en service un indicateur (32) de contrôle.

4. Dispositif de raccordement selon la revendication 3, caractérisé en ce qu'au cours du fonctionnement de l'appareil de raccordement (10) l'interrupteur d'essai (33) est maintenu de façon sûre en position d'ouverture et met en service un indicateur de contrôle (22) destiné à indiquer si le dispositif de raccordement (10) est prêt à fonctionner, lequel indicateur de contrôle est disposé dans un circuit reliant le conducteur d'alimentation (29) à l'étage d'amorçage (70).

FIG.1

FIG.2

FIG.3

FIG.4

FIG.5

FIG.6

FIG.7

EP 0 141 352 B1

15

FIG.8

FIG.9